# EUROPEAN PATENT APPLICATION

(11) **EP 1 053 686 A1**
(43) Date of publication of application: **22.11.2000**
(21) Application number: 99109680.1
(22) Date of filing: 17.05.1999
(51) Int. Cl.: A23K 3/00, A23K 3/03

(54) **Compositions for the preserving treatment of feeds**

(71) Applicant: Pharma Swede Lund AB, 223 63 Lund (SE)
(72) Inventor: Shoa'A, Abdul Rahman, 22476 Lund (SE); Ra'Afat, Kittaneh, 11115 Amman (JO); Kefah, Da'as, 6th Stair, Appt #67, Cairo (EG)
(74) Representative: Harrison, Michael Charles

(57) **Abstract**

Compositions for the preserving treatment of feeds, comprising essentially formalin, one or more emulsifiers, amyl- or isoamylacetate and/or one or more volatile oils. Optionally, the compositions further comprise a thickener, acetic or formic acid, and/or an alcohol selected from the C₂-C₄ linear or branched mono- or poly-alcohols. The compositions are intended to be used preferably for the treatment of animal feeds, have shown good antifungal properties and a pleasant smell. The invention also concerns the use of volatile oils to enhance the fungicidal activity of formaldehyde-based feed preserving compositions.

## Description

### Field of the invention:

The present invention concerns compounds and compositions for the preserving treatment of feeds, particularly when these need to be stored. The compositions are intended to be used preferably for the treatment of animal feeds.

### Background of the invention:

It is well known that toxins produced by moulds growing in foodstuffs are the cause of some diseases in animals, such as aflatoxicosis, which is a disease caused by the consumption of aflatoxins. Aflatoxins are secondary mould metabolites produced by some strains of fungus, Aspergillus flavus and Aspergillus parasiticus. Contaminated grains and grain by-products, as well as corn silage are common sources of aflatoxins. The symptoms shown by animals contaminated by these toxins are a refusal to feed, reduced growth rate, listlessness, weight loss, rough hair pelt coat and mild diarrhea. The disease may also impair reproductive efficiency.

In the field of feed preservation, several agents have been used to avoid the development of fungus during storage of the feed. For example, calcium propionate, thiabendazole, glutaraldehyde, Lawson or formalin are known agents with anti-fungal activity.

Essential or volatile oils have also been described as having an antimicrobial or antifungal activity (see for example Yousef & Tawil, Pharmazei, 1980, Vol.35(11), pp. 698-701 or Pauli & Knobloch, Zeitschrift fur Lebensmittel-Untersuchung und -Forschung, July 1987, Vol. 185(1), page 10-ff).

However, formalin is generally considered to be the agent of choice for feed preservation.

Formalin is the name of a 37% (w/w) aqueous solution of formaldehyde. This solution, which can be purchased from various sources, contains usually between less than 1% to 15% of methanol and less than 0.05% (w/w) of formic acid.

Formaldehyde is an important chemical used widely by industry to manufacture or treat building materials such as pressed-wood products, insulation products, and numerous household products such as carpeting, upholstery, drapes, as a component of glues, paints, inks, dyes, adhesives, cosmetics and medicines, and as a disinfectant or sterilizing agent.

For example, formalin is approved by the Food and Drug Administration of the United States of America for the control of external parasites such as the protozoa Ichthyophthirius spp., Chilodonella spp. and Costia spp. on cultured sport and food fishes such as salmon, trout, catfish, largemouth bath or bluegill, and for the control of fungi of the family Saprolegniaceae on salmon, trout or esocid eggs.

Formaldehyde is also found naturally in food, its concentration in fruits and vegetables varying from 3.3 to 26.3 µg/g.

In the feed production industry, and more specifically concerning animal feedstuffs, formaldehyde is used as an additive due to its antimicrobial and fungicidal action (see for example US Patent No. 4772481). Thus, it is known that formaldehyde is active against mould growth in fodders or silage and feed contamination by pathogenic bacteria such as salmonella, streptococcus, staphylococcus, Escherichia coli, clostridia and bacillus.

As a consequence of the treatment of feed with formaldehyde, wet feeds do not need to be dried by expensive processes, and dried feeds are better preserved.

Animals eating the feed are thus less contaminated by the toxins and bacteria, the mortality of these animals in farms is decreased and their health improved, and less inclusion of antibiotics and other drugs in animal feeds to control the bacterial infections in the animals is necessary.

This has a favourable economic impact on the breeders of livestock and provides less contaminated, healthier meat for the consumer.

Another advantage of the use of formaldehyde-based preserving compositions arises from the low cost for which this chemical can be obtained.

However, some problems with respect to the use of formaldehyde have been addressed in the prior art.

For instance, it is known that formaldehyde, a colourless, pungent-smelling gas, can cause watery eyes, burning sensations in the eyes and throat, nausea, and difficulty in breathing, and is, in its concentrated form, considered to be toxic by inhalation, when in contact with skin and if swallowed. Typical effects of its prolonged or repeated inhalation are increased airway resistance, decreased sensitivity of the nasopalatine nerve and irritation of the eyes and of the respiratory system. It can also cause hypersensitivity through immune reaction, inducing allergenic contact dermatitis or eczema.

Thus, in workplaces exposed to formaldehyde, protective equipment and sufficient ventilation are to be provided.

Several studies have been conducted on the toxicity of formaldehyde used as a food additive in animal feed (see for example Til, H. et al. in Food Chem. Toxicology, 1989, Vol.27, No.2, pp. 77-87) and have defined the doses below which the animals are not affected by the presence of formaldehyde in their feed.

The Food and Drug Administration of the United States of America provides for the safe use of formaldehyde (37% aqueous solution) as a food additive in feed and drinking water of animals at the rate of 2.5 kg/ton of feed to maintain complete poultry feeds salmonella negative for fourteen days (Federal Register, 1996, Vol. 61(69), 15703-4, 9 April 1996).

In other respects, the way formaldehyde is added to the feed needs to be adapted to the kind of feedstuffs to be treated since, for example, the penetration ability of the chemicals in wet and dry feeds is different.

Another problem is related to the vaporization of formaldehyde. Formaldehyde is a volatile compound and therefore evaporates. This mostly occurs under conditions of high heat or humidity. In the case of feed preserving compositions, the antibacterial/antifungal effect is then reduced and higher amounts have to be added to achieve the sufficient desired effect.

Solutions to these problems have been sought.

For example, US patent No. 4772481 discloses premix and compositions formed therefrom for preserving feeds for ruminants. The compositions contain formaldehyde, formic acid, methanol, water, are admixed with an aqueous sugar solution containing preferably molasses, and optionally contain a surfactant.

According to this reference these compositions, which act as mould growth inhibitors, reduce the use of a chemical which is undesirable when present in too high amounts (formic acid) and improve the penetration and maintenance of the active agent (formaldehyde) in the feed.

However, there is still a need for a feed preservation composition which is effective as an antimicrobial and antifungal agent over a long period of time, which does not have the drawback of the unpleasant smell of formaldehyde for the person who manipulates the composition or the feed treated with this composition, and which does not lead to a reduction in the animals' voluntary intake of the feed.

Surprisingly, the inventors of the present invention have found that some odour-producing compounds such as amylacetate, isoamylacetate or volatile oils provide a pleasant smell to the formaldehyde-based feed preserving compositions and do not alter the animals' voluntary intake of the feed.

Furthermore, the inventors of the present invention have also found that volatile oils enhance the antifungal effect of the formaldehyde-based feed preserving compositions and prolonge the time during which the antimicrobial and antifungal effect is obtained.

Thus, the main object of the present invention is to provide new feed preserving compositions which are effective as antimicrobial and antifungal agent.

Another object of the present invention is to provide new feed preserving compositions which have a pleasant smell.

Another object of the present invention is to provide new feed preserving compositions which do not lead to a reduction in the animals' voluntary intake of feed when compared to the animals' voluntary intake of untreated feed.

A further object of the present invention is to provide feed preserving compositions which are homogeneous and can therefore be easily mixed with the feed.

A further object of the present invention is to provide feed preserving compositions which are in the form of a gel.

A further object of the present invention is to provide ingredients which enhance the antifungal effect of formaldehyde-based feed preserving compositions, namely volatile oils.

A further object of the present invention is to provide ingredients which prolonge the time during which the antimicrobial and antifungal effect of formaldehyde-based feed preserving compositions is obtained, namely volatile oils.

One of the advantages of the present invention is therefore that in addition to the pleasant smell of the compositions the antifungal and antibacterial activity of these compositions is maintained or even enhanced and the time during which the effect is obtained is prolonged, when compared to compositions which do not contain these ingredients.

Further problems which can be solved by this invention with respect to known prior art compositions for the preserving treatment of feed will become apparent to the reader of the following description.

### Summary of the invention:

The present invention provides a solution to the aforementioned problems.

The aforementioned object is achieved by the feed preserving composition having the features defined in claim 1 and comprising essentially formalin, one or more emulsifiers, amyl- or isoamylacetate and/or one or more volatile oils.

The aforementioned object is also achieved by the use of volatile oils as active ingredients for feed preserving compositions, as defined in claim 24.

Preferred embodiments of the invention, including compositions comprising further active ingredients are defined in the dependent claims.

Unless otherwise specified, the percentages of ingredients used in the compositions are defined as weight per volume.

### Description of preferred embodiments:

The feed preserving compositions according to the present invention comprise essentially formalin, one or more emulsifiers, amyl- or isoamylacetate and/or one or more volatile oils.

The formalin content in the composition is preferably from 1.25% to 99.8% in weight per volume of composition. Studies have shown that the preserving effect is not sufficient when the percentage of formalin content in the treated feed is below 0.005% in weight per weight of feed, and that the treated feed smells strongly of formaldehyde and animals refuse to take the feed when the percentage of formalin content in the treated feed is above 1% in weight per weight of feed.

The emulsifier is preferably Tween 80 (commercial name of the polyoxyethylene sorbitan monooleate emulsifier) or cremophore, which can be purchased from various sources, and the emulsifier content in the composition is preferably from 0.1% to 30% in weight per volume of composition. The emulsifier helps the composition to be homogeneous and avoids a two-phase separation of the hydrophobic and hydrophilic ingredients it may contain.

The amyl- or isoamylacetate content is preferably from 0.1% to 5% in weight per volume of composition, and an amount of 2% or 2.5% is preferred. Amylacetate and isoamylacetate are volatile esters. Amylacetate or isoamylacetate gives to the composition a pleasant smell, which can be felt by the person who manipulates the composition or the feed treated with the composition much faster than the smell of formaldehyde. Furthermore, amylacetate is safe for use by humans.

The volatile oil is preferably selected from natural volatile oils such as tea tree oil, garlic oil, oregano oil, camomile oil, anise oil, terpentine oil, cinnamon oil, clove oil, eucalyptus oil, lavender oil, peppermint oil, pine oil, rosemary oil and thyme oil, or their main components, as for example cinnamaldehyde, which is the main component in cassia oil as well as cinnamon bark oil. More preferably, tea tree oil, garlic oil, oregano oil, camomile oil, anise oil, terpentine oil, cinnamon oil or cinnamaldehyde will be used. The volatile oil content in the composition is preferably from 0.1% to 15% in weight per volume of composition.

Studies made by the inventors have shown that the above-mentioned volatile oils all enhance the fungicidal activity of formaldehyde-based feed preserving compositions.

The aforementioned feed preserving compositions which further comprise a thickener are also within the scope of the invention.

The thickener is preferably selected from carboxymethylcellulose (CMC) or xanthan gum and is preferably present in an amount of up to 2% in weight per volume of composition, and preferably in an amount of 0.5% or 0.625% in weight per volume of composition. The effect of the presence of the thickener in the composition is a reduction of the vaporization of formaldehyde, which thus reduces the bad smell of the composition.

The feed preserving compositions which comprise the above-mentioned thickeners are in the form of a gel.

The aforementioned feed preserving compositions which further comprise acetic acid or formic acid are also within the scope of the invention. The content of acetic acid or formic acid in the composition is preferably in an amount of up to 30% in weight per volume of composition. Acetic acid and formic acid may be added as antibacterial and fungicidal activity enhancers, since both are known to have food preservative and germicide properties, or simply as filler.

The aforementioned feed preserving compositions which further comprise an alcohol selected from the C₂-C₄ linear or branched mono- or poly-alcohols are also within the scope of the invention. The content of said alcohol in the composition is preferably of up to 25% in weight per volume of composition and the alcohol is preferably selected from ethanol, isopropanol, propyleneglycol and glycerine. The alcohol is used as a solvent.

The invention is directed to compositions for preserving feeds, and preferably animal feeds. The feeds include wet and dry fodders, silage, grains, and also wet by-product animal feeds such as vegetable and fruit waste.

The invention will now be described in more detail with reference to the following examples.

### Examples of compositions:

**Example 1:** Composition comprising formalin, an emulsifier, amylacetate, cinnamaldehyde, a thickener, acetic acid and an alcohol.

| | |
|---|---|
| Formalin | 3830 g |
| Tween 80 | 100 g |
| Amylacetate | 100 g |
| Cinnamaldehyde | 20 g |
| CMC | 25 g |
| Acetic acid | 100 g |
| Isopropanol | 200 g |
| Total: | 4375 g |

The total volume is 4000 ml.

The composition has the consistency of a gel. To prepare the composition, first the CMC is dissolved in formalin, then the other ingredients are added and the composition is stirred for 5 minutes.

**Example 2:** Composition comprising formalin, an emulsifier, amylacetate, cinnamaldehyde, acetic acid and an alcohol.

| | |
|---|---|
| Formalin | 4375 g |
| Tween 80 | 100 g |
| Amylacetate | 100 g |
| Cinnamaldehyde | 30 g |
| Acetic acid | 255 g |
| Isopropanol | 515 g |
| Total: | 5375 g |

The total volume is 5000 ml.

The composition is liquid. To prepare the composition, the ingredients are mixed and the composition is stirred for 5 minutes.

**Example 3:** Composition comprising formalin, an emulsifier, amylacetate, cinnamaldehyde, CMC, acetic acid and an alcohol.

| | |
|---|---|
| Formalin | 4375 g |
| Tween 80 | 100 g |
| Amylacetate | 100 g |
| Cinnamaldehyde | 30 g |
| CMC | 25 g |
| Acetic acid | 255 g |
| Isopropanol | 515 g |
| Total: | 5400 g |

The total volume is 5000 ml.

The composition has the consistency of a gel. To prepare the composition, first the CMC is dissolved in formalin, then the other ingredients are added and the composition is stirred for 5 minutes.

**Example 4:** Composition comprising formalin, an emulsifier, amylacetate, cinnamaldehyde, CMC, acetic acid and an alcohol.

| | |
|---|---|
| Formalin | 3500 g |
| Tween 80 | 100 g |
| Amylacetate | 100 g |
| Cinnamaldehyde | 20 g |
| CMC | 25 g |
| Acetic acid | 155 g |
| Isopropanol | 380 g |
| Total: | 4280 g |

The total volume is 4000 ml.

The composition has the consistency of a gel. To prepare the composition, first the CMC is dissolved in formalin, then the other ingredients are added and the composition is stirred for 5 minutes.

**Example 5:** Composition comprising formalin, an emulsifier, cinnamaldehyde, volatile oils, formic acid and an alcohol.

| | |
|---|---|
| Formalin | 2324 g |
| Tween 80 | 520 g |
| Cinnamaldehyde | 290 g |
| Anise oil | 40 g |
| Terpentine oil | 40 g |
| Formic acid | 960 g |
| Isopropanol | 150 g |
| Total: | 4324 g |

The total volume is 4000 ml.

The composition is liquid and clear. To prepare the composition, first the oils are dissolved in isopropanol, then formic acid and Tween 80 are added, then formalin is added, and the composition is stirred for 5 minutes.

**Example 6:** Composition comprising formalin, an emulsifier, amylacetate, volatile oils, acetic acid and an alcohol.

| | |
|---|---|
| Formalin | 3500 g |
| Tween 80 | 100 g |
| Amylacetate | 100 g |
| Cinnamon oil | 20 g |
| Tea tree oil | 20 g |
| Acetic acid | 1130 g |
| Isopropanol | 438 g |
| Total: | 5308 g |

The total volume is 5000 ml.

The composition is liquid. To prepare the composition, first the oils are dissolved in isopropanol, then acetic acid and Tween 80 are added, then formalin is added, and the composition is stirred for 5 minutes.

**Example 7:** Composition comprising formalin, an emulsifier, amylacetate, a volatile oil, acetic acid and an alcohol.

| | |
|---|---|
| Formalin | 3500 g |
| Tween 80 | 100 g |
| Amylacetate | 100 g |
| Tea tree oil | 20 g |
| Acetic acid | 1130 g |
| Isopropanol | 455 g |
| Total: | 5305 g |

The total volume is 5000 ml.

The composition is liquid. To prepare the composition, first the oil is dissolved in isopropanol, then acetic acid and Tween 80 are added, then formalin is added, and the composition is stirred for 5 minutes.

**Example 8:** Composition comprising formalin, an emulsifier, amylacetate, acetic acid and an alcohol.

| | |
|---|---|
| Formalin | 3500 g |
| Tween 80 | 100 g |
| Amylacetate | 100 g |
| Acetic acid | 1130 g |
| Isopropanol | 465 g |
| Total: | 5295 g |

The total volume is 5000 ml.

The composition is liquid. To prepare the composition, the ingredients are mixed and the composition is stirred for 5 minutes.

**Example 9:** Composition comprising formalin, an emulsifier, amylacetate, volatile oils, acetic acid and an alcohol.

| | |
|---|---|
| Formalin | 3500 g |
| Tween 80 | 100 g |
| Amylacetate | 100 g |
| Garlic oil | 20 g |
| Oregano oil | 20 g |
| Camomile oil | 20 g |
| Acetic acid | 1130 g |
| Isopropanol | 416 g |
| Total: | 5306 g |

The total volume is 5000 ml.

The composition is liquid. To prepare the composition, first the oils are dissolved in isopropanol, then acetic acid and Tween 80 are added, then formalin is added, and the composition is stirred for 5 minutes.

### Test of antifungal activity:

The antifungal activity of these compositions was tested by in vitro studies.

For this purpose, 100 g of feed was mixed with different amounts of the compositions to be tested, so that the percentage of formalin present in the resulting mixture was between 0.002 weight % and 0.84 weight %. Then, suitable dilutions of these mixtures with water were spread on plates containing a suitable growth medium (based on dextrose agar and NaCl) and the number of fungus colonies which were able to develop after 3 days of incubation at 25°C was counted and compared to the number of fungus colonies which were able to develop from untreated feed under the same experimental conditions.

The results of these tests showed that with use of above 0.002 weight % of formalin content in the mixture, less colonies were found to grow from the treated mixtures than from the corresponding untreated mixtures, and that with use of above 0.14 weight % of formalin content in the mixture almost no colonies were found to grow from the treated mixtures.

In a similar manner, formaldehyde-based feed preserving compositions comprising one or more volatile oils according to the present invention were tested for their antifungal activity. The results unexpectedly showed that the volatile oils according to the present invention enhance the antifungal activity of the formaldehyde-based feed preserving compositions.

The results also unexpectedly showed that the volatile oils according to the present invention prolonge the time during which the antimicrobial and antifungal effect of the feed preserving compositions is obtained. Thus, the feeds treated by the compositions according to the present invention were free from fungus or bacteria for a period of time which was longer than three months.

### Industrial applicability:

The compositions according to the present invention can be used to treat feed at an industrial level in the following manner.

Either the composition containing the active ingredients is poured on and mixed with the feed in amount of 4 litres of composition per 1000 kg of feed, or the composition containing the active ingredients is first diluted 1:1 with water, i.e. 4 litres of composition are mixed with 4 litres of water and then poured on and mixed with 1000 kg of feed.

In the case of dilution of the composition containing the active ingredients with water and application to dry feed, a measurement of the relative humidity in the feed after treatment shows the presence of 1% relative humidity in the treated feed.

Amounts of humidity of up to 5% in the treated feed are acceptable. It is therefore possible to further dilute the composition if larger volumes of composition are more suitable for the mixing process. Above that 5% relative humidity value, the antifungal or antibacterial effects may no longer be achieved due to the fact that the medium favours the development of microorganisms or fungus or the feed goes mouldy.

As mentioned above, these compositions are particularly useful for the treatment of feed, and more particularly dry animal corn feed such as maize.

### Efficacy of the treatment with respect to the reduction of mortality of animals:

These compositions were tested on chicken feed on several farms. The treated feed was given to animals and observations and measurements were made to assess the efficacy of the treatment on the reduction of mortality of the animals. The results were very satisfactory and are shown in Table I.

**Table I**

| **FARM** | **A** | | **B** | |
|---|---|---|---|---|
| | **Treated** | **Control** | **Treated** | **Control** |
| Total number of chickens | 4945 | 3039 | 6905 | 8446 |
| % of mortality | 5.87 | 7.3 | 3.00 | 4.61 |

As is clear from the results, the mortality of the animals decreased in the treated population when compared to the untreated population.

Although the present invention has been described with reference to several examples and embodiments of specific products, compositions and concentrations of ingredients, this is not to be considered as a limitation of the invention but merely illustrative thereof.

## Claims

1. A feed preserving composition comprising:
(i) formalin;
(ii) one or more emulsifiers;
(iii)amyl- or isoamylacetate and/or one or more volatile oils.

2. The feed preserving composition according to claim 1 wherein the formalin content is from 1.25% to 99.8%.

3. The feed preserving composition according to claim 1 or 2 wherein the emulsifier content is from 0.1% to 30%.

4. The feed preserving composition according to any one of the preceding claims wherein the emulsifier is Tween 80 or cremophore.

5. The feed preserving composition according to any one of the preceding claims wherein the amyl- or isoamylacetate content is from 0.1% to 5%.

6. The feed preserving composition according to any one of the preceding claims wherein the amyl- or isoamylacetate content is 2% or 2.5%.

7. The feed preserving composition according to any one of the preceding claims which comprises one or more volatile oils in an amount of from 0.1% to 15%.

8. The feed preserving composition according to claim 7 wherein the volatile oil is selected from tea tree oil, garlic oil, oregano oil, camomile oil, anise oil, terpentine oil, cinnamon oil or cinnamaldehyde.

9. The feed preserving composition according to any one of the preceding claims which further comprises a thickener.

10. The feed preserving composition according to claim 9 wherein the thickener is present in an amount of up to 2%.

11. The feed preserving composition according to claim 10 wherein the thickener is present in an amount of 0.5% or 0.625%.

12. The feed preserving composition according to any one of claims 9 to 11 wherein the thickener is selected from carboxymethylcellulose or xanthan gum.

13. The feed preserving composition according to claim 12 which is in the form of a gel.

14. The feed preserving composition according to any one of the preceding claims which further comprises acetic acid or formic acid.

15. The feed preserving composition according to claim 14 wherein the content of acetic acid or formic acid is of up to 30%.

16. The feed preserving composition according to any one of the preceding claims which further comprises an alcohol selected from the C₂-C₄ linear or branched mono- or poly-alcohols.

17. The feed preserving composition according to claim 16 wherein the content of said alcohol is of up to 25%.

18. The feed preserving composition according to claim 17 wherein the alcohol is selected from ethanol, isopropanol, propyleneglycol and glycerine.

19. The feed preserving composition according to any one of the preceding claims which is diluted with water before application thereof to the feed.

20. The feed preserving composition according to claim 19 wherein the dilution ratio is about 1:1.

21. Use of a feed preserving composition according to any of the preceding claims for the treatment of feed.

22. Use of a feed preserving composition according to claim 21 wherein the feed to be treated is selected from wet and dry fodders, silage, grains and wet by-product animal feeds such as vegetable and fruit waste feed.

23. A feed treated by a feed preserving composition according to any one of claims 1 to 20.

24. Use of a volatile oil to enhance the fungicidal activity of a formaldehyde-based feed preserving composition.

25. Use of a volatile oil according to claim 24 wherein the volatile oil is selected from tea tree oil, garlic oil, oregano oil, camomile oil, anise oil, terpentine oil, cinnamon oil or cinnamaldehyde.
